(19) Europäisches Patentamt
European Patent Office
Office européen des brevets

(11) **EP 2 723 604 B1**

(12) **FASCICULE DE BREVET EUROPEEN**

(45) Date de publication et mention
de la délivrance du brevet:
**08.06.2016   Bulletin 2016/23**

(21) Numéro de dépôt: **12734966.0**

(22) Date de dépôt: **19.06.2012**

(51) Int Cl.:
*B60W 50/14* (2012.01)    *B60Q 1/00* (2006.01)
*B60L 3/12* (2006.01)    *B60L 15/20* (2006.01)
*B60W 50/00* (2006.01)    *B60W 40/09* (2012.01)
*B60R 16/023* (2006.01)

(86) Numéro de dépôt international:
**PCT/FR2012/051370**

(87) Numéro de publication internationale:
**WO 2012/175857 (27.12.2012 Gazette 2012/52)**

(54) **PROCEDE D'AIDE AU PILOTAGE D'UN VEHICULE AUTOMOBILE EN VUE D'OPTIMISER L'UTILISATION DE LA RESERVE D'ENERGIE**

FAHRHILFEVERFAHREN FÜR EIN KRAFTFAHRZEUG ZUR OPTIMIERTEN NUTZUNG DER ENERGIEVERSORGUNG

MOTOR VEHICLE DRIVING ASSISTANCE METHOD WITH A VIEW TO OPTIMIZING THE USE OF THE POWER SUPPLY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.06.2011   FR 1155431**

(43) Date de publication de la demande:
**30.04.2014   Bulletin 2014/18**

(73) Titulaire: **Renault S.A.S.**
**92100 Boulogne-Billancourt (FR)**

(72) Inventeurs:
• **PETIT, Clément**
**F-75013 Paris (FR)**
• **CHAZAL, Yann**
**F-75015 Paris (FR)**

(56) Documents cités:
EP-A1- 0 076 764    EP-A1- 2 011 696
WO-A1-03/086786    DE-A1- 10 138 750
DE-A1- 19 612 062

## Description

L'invention a pour objet un dispositif d'aide à la conduite d'un véhicule, et en particulier d'un véhicule à propulsion électrique L'invention a également pour objet un véhicule dont l'ordinateur de bord est configuré pour mettre en ouvre un tel procédé.

L'autonomie d'un véhicule électrique étant sensiblement plus réduite que celle d'un véhicule équipé d'un moteur à combustion, il est important de prendre en compte tous les facteurs qui permettent d'améliorer cette autonomie, et en particulier le style de conduite du conducteur.

Afin de permettre au conducteur de planifier son trajet en fonction de l'autonomie résiduelle prévisible du véhicule, différentes méthodes de l'estimation de l'autonomie sont proposées, qui prennent en compte la topologie de la route ou éventuellement le style du conducteur.

Le document EP 2 011 696 A1 décrit un procédé et un véhicule comprenant les caractéristiques du préambule de la revendication 1 et de la revendication 13.

La demande de brevet KR 10025 44 26 propose par exemple d'estimer l'état de charge (SOC « State Of Charge ») de la batterie, et d'effectuer une moyenne de la consommation du véhicule pour obtenir, par extrapolation, l'autonomie résiduelle du véhicule.

La demande de brevet KR 10025 67 49 propose en outre d'utiliser les informations de différents capteurs pour qualifier le style de conduite du conducteur, et pour adapter le calcul de l'autonomie au style de conduite détecté.

La demande de brevet DE 103 02 504 propose de combiner des informations obtenues par les capteurs du véhicule et des informations obtenues par exemple par des cartographies GPS, ou par d'autres bases de données détaillant les caractéristiques des routes à parcourir, afin d'évaluer, en fonction de différents types de conduite du conducteur, l'autonomie résiduelle ou l'autonomie sur un trajet prévisionnel que le conducteur s'apprête à parcourir.

Ces dispositifs d'estimation de l'autonomie du véhicule s'efforcent donc de caractériser le mode de conduite du conducteur, afin d'améliorer la fiabilité de l'autonomie calculée.

Ces systèmes permettent au conducteur d'adapter son mode de conduite afin d'augmenter l'autonomie effective du véhicule. Le dispositif de DE 103 02 504 permettrait par exemple de comparer, avant d'effectuer un trajet, l'autonomie du véhicule sur ce trajet suivant un mode de conduite économique prédéfini et suivant un mode de conduite sportif prédéfini.

Cependant aucun de ces deux modes de conduite ne correspond a priori exactement au mode de conduite effectif que le conducteur va adopter. En outre, l'estimation prospective des deux autonomies sur le trajet prévu nécessite de nombreuses données sur la topologie du trajet à parcourir, données qui sont plus ou moins exactes, et plus ou moins disponibles.

L'invention a pour objectif de proposer un système d'aide à la conduite qui permette au conducteur d'évaluer le gain en termes d'autonomie qu'il pourrait obtenir s'il adaptait son mode de conduite à un mode de conduite économique « optimisé standard ». Les calculs d'autonomie effectués pour ce faire, devront tenir compte le mieux possible du style de conduite effectif du conducteur.

Le système d'évaluation doit être capable de calculer l'autonomie à partir des données issues des seuls capteurs du véhicule, sans que le système d'évaluation dispose nécessairement d'une base de données sur la topologie des routes à parcourir prochainement.

A cette fin un procédé est proposé pour l'aide à la conduite d'un véhicule automobile comportant au moins un moteur électrique alimenté par une batterie et apte à entraîner des roues motrices du véhicule. Dans ce procédé on calcule, à partir de la consommation effective d'énergie du véhicule et de valeurs collectées par des capteurs du véhicule, une consommation optimisée du véhicule sur le même trajet que le véhicule est en train de parcourir, la consommation optimisée correspondant à un style de conduite de référence, et on informe le conducteur de la distance qu'il pourrait parcourir avec la réserve d'énergie disponible à bord du véhicule, s'il adoptait le style de conduite de référence, ou bien on informe le conducteur de l'économie d'énergie par unité de distance parcourue qu'il pourrait réaliser, s'il adoptait le style de conduite de référence.

Selon un mode de mise en oeuvre préféré de ce procédé, on calcule sur une période de temps ou sur une longueur de trajet prédéfinie, une surconsommation ou énergie moyenne consommée en excès par le véhicule, puis on calcule une consommation optimisée en soustrayant la surconsommation à l'énergie effectivement consommée par le véhicule. La surconsommation ou énergie moyenne d'excès correspondant à une moyenne d'énergie au km consommée en excès par rapport au mode de conduite de référence. La consommation optimisée est également, de préférence, une valeur par unité de distance parcourue. On reste bien sûr dans le cadre de l'invention si on commence par soustraire une énergie instantanée d'excès à l'énergie instantanée consommée par le véhicule, *puis* on intègre ou on filtre la différence pour obtenir une valeur de consommation optimisée moyenne.

Avantageusement on détermine dans un premier temps une puissance ou une énergie instantanée d'excès, à partir de laquelle on calcule l'énergie moyenne d'excès, la puissance ou l'énergie instantanée d'excès étant calculée à partir de paramètres comprenant la vitesse instantanée du véhicule, la puissance puisée sur la batterie ou la puissance transmise aux roues par le moteur, un signal d'actionnement des freins, et une énergie cinétique de consigne calculée à partir des paramètres précédents. Par puissance instantanée on entend une énergie par unité de temps, par énergie instantanée on entend une énergie par unité de distance. L'énergie instantanée d'excès, qui par intégration, permet de calculer une énergie moyenne d'excès, peut être prise égale à la puissance instantanée d'excès divisée par la vitesse du véhicule.

De manière préférentielle, l'énergie cinétique de consigne est calculée en intégrant la puissance fournie aux roues par le moteur, et en imposant pour bornes à chaque instant à l'intégrale, la valeur nulle comme borne inférieure, et l'énergie cinétique totale du véhicule comme borne supérieure.

Selon un mode de mise en oeuvre préféré, la puissance instantanée d'excès comprend notamment un terme dépendant de la puissance dissipée en climatisation et/ou en chauffage du véhicule.

Selon un mode de mise en oeuvre avantageux, le calcul de la puissance instantanée d'excès comprend un ou plusieurs termes qui sont pris en compte si et seulement si une valeur d'énergie cinétique récemment accumulée par le véhicule dépasse un seuil d'énergie cinétique. Ces termes traduisent les répercussions d'un mode de conduite avec une mauvaise anticipation des ralentissements.

Selon un autre mode de mise en oeuvre qui peut être combiné au précédent, la puissance instantanée d'excès comprend un ou plusieurs termes liés à une vitesse excessive, qui sont pris en compte si et seulement si la vitesse du véhicule dépasse une vitesse optimale de référence.

Le terme instantané lié à une vitesse excessive du véhicule peut par exemple inclure une composante de frottement sous la forme d'un polynôme du second ou du troisième degré de la vitesse du véhicule.

La composante de frottement peut simultanément être un polynôme du second ou du troisième degré d'une vitesse de consigne, qui est la vitesse associée à l'énergie cinétique de consigne.

Le terme lié à une vitesse excessive du véhicule peut également inclure une composante de freinage de survitesse, qui est le produit, par le rendement du moteur, d'une différence de termes, parmi lesquels on compte la puissance transmises aux roues par le moteur ou la puissance délivrée par la batterie, l'énergie cinétique de consigne, et un terme de résistance qui est fonction de la vitesse du véhicule.

Selon un mode de mise en oeuvre particulièrement avantageux, la puissance instantanée d'excès comprend un terme lié à un manque d'anticipation dans la conduite du véhicule, qui est comptabilisé si et seulement si le véhicule, dans une plage de temps prédéfinie précédent l'instant de calcul, a accumulé une quantité d'énergie cinétique supérieure à un seuil d'énergie cinétique.

Le calcul du terme lié à un manque d'anticipation peut faire intervenir un rendement du moteur, un rendement de freinage récupératif, la puissance puisée sur la batterie ou la puissance transmise aux roues par le moteur, l'énergie cinétique de consigne, et un terme de résistance qui est fonction de la vitesse instantanée du véhicule.

On peut informer le conducteur de sa surconsommation instantanée par rapport au style de conduite de référence, ou/et on peut informer le conducteur de sa surconsommation moyenne sur une certaine distance ou sur un certain temps de trajet. La consommation ou la surconsommation instantanée peut être elle-même une moyenne effectuée sur une distance ou une durée plus réduite que la distance ou la durée choisie pour le calcul de la surconsommation moyenne.

Le calcul de surconsommation moyenne précédent peut être par exemple effectué par un filtre du premier degré, c'est-à-dire en calculant un barycentre de la dernière valeur de consommation ou de surconsommation estimée, et de la valeur de consommation ou surconsommation moyenne au pas précédent. On ne s'éloigne pas du domaine de l'invention si l'opération de moyennage est effectuée par la même méthode, directement sur la valeur de puissance ou d'énergie consommée en mode de roulage optimal, au lieu d'être d'abord effectuée séparément sur la valeur de puissance ou d'énergie de consommation totale et sur la valeur de puissance ou d'énergie de surconsommation. L'emploi d'un filtre du premier degré permet de limiter l'espace mémoire nécessaire au calcul de la moyenne.

Selon un autre aspect, un véhicule automobile est équipé d'un dispositif d'aide à la conduite configuré pour calculer, à partir de la consommation effective d'énergie du véhicule sur un trajet, une consommation optimisée du véhicule sur le même trajet correspondant à un style de conduite de référence, et pour informer le conducteur de la distance qu'il pourrait parcourir avec la réserve d'énergie disponible à bord du véhicule, s'il adoptait le style de conduite de référence, ou pour informer le conducteur de la réduction de consommation qu'il pourrait obtenir en adaptant sa conduite.

Selon un mode de réalisation avantageux, on peut calculer une énergie moyenne d'excès par unité de distance parcourue en intégrant ou en filtrant sur la distance parcourue, une puissance instantanée d'excès divisée par la vitesse instantanée du véhicule.

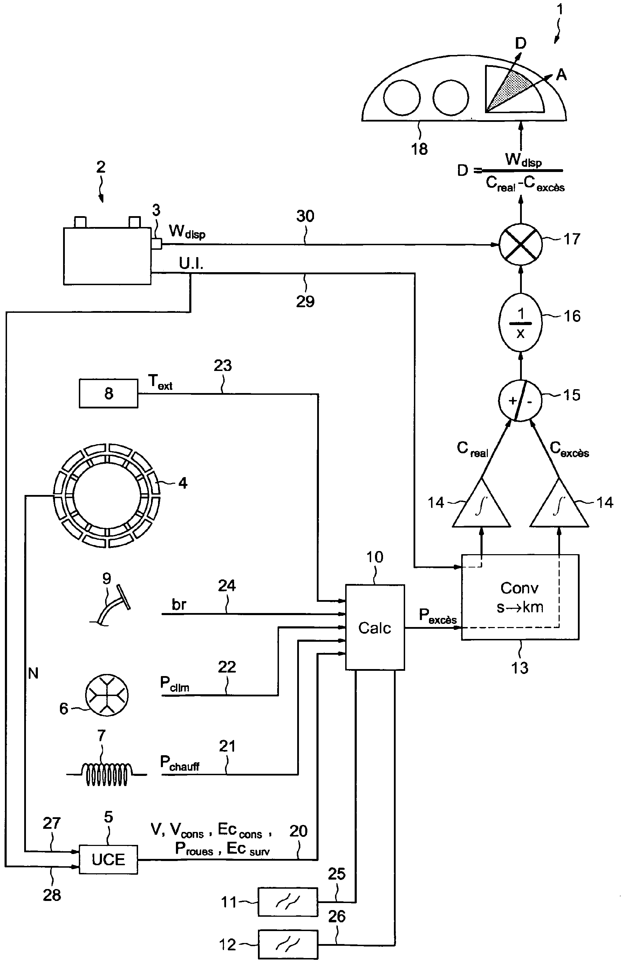

L'invention sera mieux comprise à la lecture de la description détaillée d'un mode de réalisation pris à titre d'exemple nullement limitatif, et illustré par la figure annexée, qui représente de manière simplifiée un dispositif d'aide à la conduite suivant l'invention.

Tel qu'illustré sur la figure, un dispositif 1 d'aide à la conduite comprend une batterie 2 équipée d'un gestionnaire de batterie 3, un moteur électrique 4, une unité de commande électronique (UCE) 5, un système de climatisation 6, un système de chauffage 7, un capteur de température extérieure 8, un capteur de pédale de frein 9, et un calculateur de puissance instantanée d'excès 10.

Le dispositif comprend également des cartographies 11 et 12 reliant respectivement la température extérieure du véhicule à une valeur maximale de puissance à consommer par le système de chauffage et à une valeur maximale de puissance à consommer par le système de climatisation.

Le dispositif comprend également un système d'affichage 18, par exemple placé au niveau du tableau de bord, permettant d'afficher diverses informations à l'attention du conducteur, par exemple la puissance réellement consommée au niveau de la batterie 2, l'énergie totale disponible au niveau de la batterie 2, une autonomie résiduelle A que le véhicule peut encore parcourir avec la réserve d'énergie $W_{disp}$ de la batterie 2, et une autonomie optimisée D représentant la distance que le véhicule pourrait encore parcourir avec l'énergie $W_{disp}$ disponible dans la batterie 2, si le conducteur suivait un mode de conduite de référence.

Le mode de conduite de référence peut notamment consister à ne pas utiliser le chauffage 7 ou la climatisation 6 au-delà des valeurs de puissance préconisées par les cartographies 11 et 12, à rouler au maximum à une vitesse de croisière optimale prédéfinie qui peut par exemple être de l'ordre de 90 km/heure, et à anticiper des obstacles à venir, c'est-à-dire ne pas accélérer démesurément le véhicule si l'on doit être amené à freiner prochainement.

Le dispositif 1 comprend en outre un convertisseur 13, des filtres intégrateurs 14, un soustracteur 15, un inverseur 16, un multiplicateur 17.

Le calculateur 10 calcule à chaque instant une puissance instantanée que le véhicule puise sur la batterie, en excès par rapport à ce que le véhicule puiserait sur la batterie en effectuant le même trajet en étant conduit selon le mode de conduite de référence.

Pour cela, le calculateur 10 reçoit diverses informations de différents capteurs du véhicule, ces informations étant éventuellement partiellement traitées par l'unité de commande électronique 5. Ainsi, le calculateur 10 reçoit par une connexion 21 la puissance instantanée consommée par le système de chauffage 7, reçoit par une connexion 22 la puissance instantanée consommée par le système de climatisation 6, reçoit par une connexion 24 un signal "br" issu du capteur de frein 9 et indiquant si la pédale de frein est actionnée. Le calculateur 10 reçoit par une connexion 23 la valeur de température extérieure $T_{ext}$. A l'aide de cette température $T_{ext}$, il peut aller chercher par des connexions 25 et 26, dans les cartographies 11 et 12, les valeurs maximales recommandées de puissance consommée en chauffage et en climatisation, respectivement $P_{chauff-max}$ et $P_{clim\_max}$. L'unité de commande électronique 5 reçoit par une connexion 27 à partir d'un capteur de position du rotor du moteur 4, une information lui permettant de calculer la vitesse de rotation N du moteur 4. Elle reçoit également par une connexion 28, à partir du gestionnaire de batterie 3, la valeur de puissance instantanée de la batterie correspondant au produit le la tension aux bornes de la batterie par le courant entrant dans la batterie, U.I.

A partir de ces valeurs, ainsi éventuellement que d'un rapport de démultiplication d'une boîte de vitesses, l'unité de commande électronique 5 calcule une vitesse instantanée V du véhicule, une puissance $P_{roues}$ -correspondant à la puissance transmise par le moteur pour actionner les roues, ou à la puissance aux roues renvoyée vers la machine électrique 4 pour être transformée en énergie électrique, une énergie cinétique de consigne $Ec_{cons}$ représentant une part d'énergie cinétique volontairement communiquée au véhicule par le conducteur, une vitesse de consigne $V_{cons}$ déduite de l'énergie cinétique précédente, et une énergie cinétique de survitesse de non anticipation $EC_{surv}$.

L'UCE 5 envoie toutes ces valeurs vers le calculateur 10 qui calcule une puissance d'excès $P_{excès}$. Cette valeur de puissance est envoyée vers le convertisseur 13. Le convertisseur 13 convertit la puissance d'excès instantanée $P_{excès}$, en une valeur d'énergie consommée par unité de distance parcourue. Cette valeur par unité de distance est ensuite filtrée -ou intégrée- par l'un des intégrateurs 14, pour délivrer une consommation d'excès $C_{excès}$ moyenne par unité de distance parcourue.

Le convertisseur 13, qui reçoit également l'énergie effectivement consommée par la batterie 2, soit U x I, au travers d'une connexion 29, traduit également cette énergie instantanée en une énergie consommée par unité de distance parcourue, qu'il envoie sur un autre intégrateur 14. Celui-ci délivre une énergie par unité de distance parcourue effectivement consommée par le véhicule, soit $C_{real}$.

La consommation réelle $C_{real}$ est envoyée sur une entrée positive du soustracteur 15, la consommation d'excès $C_{excès}$ est envoyée sur une entrée négative du soustracteur 15, le résultat du soustracteur 15 étant envoyé sur un inverseur 16 puis sur un multiplicateur 17 qui reçoit sur une de ses entrées par une connexion 30, l'énergie $W_{disp}$ encore disponible dans la batterie 2.

A la sortie du multiplicateur 17, on obtient une valeur D représentant la distance que le véhicule pourrait parcourir si le conducteur adaptait son mode de conduite au mode de conduite de référence. Le résultat est affiché grâce au système d'affichage 18.

Afin de calculer la puissance $P_{excès}$ consommée en excès par le véhicule, le calculateur 10 vérifie dans quelle plage de valeurs se trouvent certains paramètres de fonctionnement du véhicule. Ainsi, grâce à la cartographie 11, le calculateur 10 vérifie si la puissance consommée par la climatisation est supérieure à une valeur $P_{clim\_Max}$, cartographiée dans la cartographie 11 pour la valeur $T_{ext}$ de température extérieure mesurée.

Si la puissance est supérieure à la puissance préconisée $P_{clim\_max}$, le calculateur 10 ajoute à la valeur $P_{excès}$

un terme excédent de climatisation = $P_{clim}$-$P_{clim\_max}$.

Si la puissance consommée par la climatisation est inférieure au seuil cartographié, le calculateur 10 n'ajoute aucun terme relatif à la climatisation dans le terme de puissance d'excès $P_{excès}$.

A l'aide de la cartographie 12, le calculateur 10 procède de manière similaire pour la puissance $P_{chauff}$ consommée par le système de chauffage 7. Il calcule ainsi, à l'aide des cartographies 11 et 12, un terme de puissance d'excès $P_{conf-excès}$ lié à la régulation du confort thermique de l'habitacle. En divisant $P_{conf\_excès}$ par la vitesse du véhicule, on obtient la surconsommation par unité de distance parcourue, liée à une utilisation excessive des moyens de confort thermiques. Les termes contribuant à l'énergie $\Delta E_{surconf}$ de surconsommation thermique sont résumés dans le tableau 1 ci-dessous :

Tableau 1 : valeurs $\Delta E_{surconf}$

| | $P_{chauff} \leq P_{chauff\_max}$ | $P_{chauff} > P_{chauff\text{-}max}$ |
|---|---|---|
| $P_{clim} \leq P_{clim\_max}$ | 0 | $\left(P_{chauff} - P_{chauff\_max}\right) x \frac{1}{V}$ |
| $P_{clim} > P_{clim\_max}$ | $\left(P_{clim} - P_{clim\_max}\right) x \frac{1}{V}$ | $\left(P_{chauff} - P_{chauff\_max}\right) x \frac{1}{V}$ $+ \left(P_{clim} - P_{clim\_max}\right) x \frac{1}{V}$ |

Bien sûr le cas de figure représenté par la dernière case en bas à droite du tableau ne devrait normalement jamais se produire, puisqu'il correspondrait à une utilisation simultanée de la climatisation et du chauffage.

Le calculateur 10 calcule également un terme d'énergie d'excès $\Delta E_{allure}$, qui vient s'ajouter au terme précédent $\Delta E_{surconf}$ dans l'estimation de l'énergie $E_{excès}$ consommée en excédent par rapport au mode de conduite de référence. $\Delta E_{allure}$ dépend de l'allure du véhicule, c'est-à-dire de sa vitesse instantanée et de son historique récent de vitesse.

Ce terme $\Delta E_{allure}$ a pour but de faire ressortir l'influence d'une vitesse qui serait trop élevée en moyenne, ainsi que l'influence d'un manque d'anticipation, le manque d'anticipation se traduisant par des variations de vitesse dont l'amplitude est trop élevée par rapport à l'étalement dans le temps de ces variations.

Pour cela le calculateur 10 compare la vitesse instantanée à une ou plusieurs vitesses seuils, par exemple une première vitesse seuil $V_1$ et une deuxième vitesse seuil $V_{eco}$.

Parallèlement, le calculateur 10 vérifie également la valeur atteinte par une valeur $Ec_{surv}$ homogène à une énergie cinétique, et qui reflète une quantité d'énergie cinétique accumulée sur un intervalle de temps précédant l'instant actuel.

Une valeur d'énergie cinétique $Ec_{surv}$ supérieure à un seuil, -seuil égal à zéro dans le mode de réalisation illustré- peut ainsi traduire le fait que le conducteur a demandé une accélération trop importante au véhicule. Le véhicule possède alors une énergie cinétique « de fraîche date » non encore estompée au moment où le conducteur décélère à nouveau.

Le tableau 2 résume une manière possible de comptabiliser les termes contributifs à l'énergie au km $\Delta E_{allure}$ consommée en excès par rapport à un mode de conduite de référence. Suivant le domaine de vitesse V du véhicule et suivant son historique d'énergie cinétique caractérisé par la valeur $Ec_{surv}$, l'énergie $\Delta E_{allure}$ comprend un terme $E_{AR}$ correspondant à une énergie ayant effectué un aller-retour inutile de la batterie aux roues, un terme $E_{brake}$ d'énergie dissipée dans les freins, et un terme $E_{aero}$ traduisant l'excès d'énergie de frottement aérodynamique dissipée par rapport à un roulage à vitesse modérée (vitesse inférieure ou égale à $V_{eco}$).

Tableau 2 : valeurs $\Delta E_{allure}$

| | $V \leq V_1$ | $V_1 < V \leq V_{eco}$ | $V > V_{eco}$ |
|---|---|---|---|
| $Ec_{surv} = 0$ | 0 | $E_{brake}$ | $E_{aero} + E_{brake}$ |
| $Ec_{surv} > 0$ | $E_{AR} + E_{brake}$ | $E_{AR} + E_{brake}$ | $E_{AR} + E_{aero} + E_{brake}$ |

Si l'énergie cinétique $Ec_{surv}$ représentant le manque d'anticipation est inférieure ou égale au seuil choisi, ce qui correspond à la deuxième ligne du tableau 2 :

* on ne comptabilise aucun terme d'excès lié à l'allure si la vitesse instantanée du véhicule est inférieure à une première vitesse $V_1$. $V_1$ correspond à une vitesse minimale nécessaire aux manoeuvres de manutention et de parquaage du véhicule, par exemple une vitesse de 10 km/heure.

* si la vitesse V du véhicule est supérieure à la première vitesse seuil $V_1$, le calculateur 10 prend en compte un premier terme de dissipation excessive $E_{brake}$ correspondant à une énergie dissipée à cause du freinage par friction. Cette énergie $E_{brake}$ aurait par exemple pu être évitée en roulant moins vite, ou en freinant avec le frein moteur.

* si la vitesse instantanée du véhicule est supérieure à une vitesse seuil $V_{eco}$, le calculateur 10 comptabilise en outre un terme d'excès lié aux dissipations d'avancement par friction. Ce terme d'excès peut comprendre un terme $E_{bear}$ traduisant la friction des roulements des roues du véhicule, ainsi qu'un terme $E_{aero}$ de pertes aérodynamiques liées à la résistance d'avancement dans l'air du véhicule. Pour des raisons d'ordre de grandeur, on considère dans le mode de réalisation décrit, que le terme de puissance d'excès dissipée par frottement est sensiblement égal à la puissance liée aux pertes aérodynamiques, et on néglige la contribution des frottements de roulement. On ne s'éloigne pas du cadre de l'invention en comptabilisant également un terme un terme $E_{bear}$ traduisant la friction des roulements des roues du véhicule.

Dans le cas où l'énergie cinétique de survitesse $Ec_{surv}$ est supérieure au seuil choisi -ici 0-, ce, qui correspond à la troisième ligne du tableau 2 :

* le calculateur 10 ajoute au terme d'énergie d'excès une valeur $E_{AR}$ liée aux pertes d'énergie par aller-retour de l'énergie puisée sur la batterie, envoyée vers les roues, puis récupérée, en partie seulement, au moyen du freinage récupératif,

* le calculateur 10 ajoute également au terme de puissance d'excès $E_{excès}$ une contribution $E_{brake}$ comptabilisant l'énergie éventuellement dissipée par freinage,

* si la vitesse instantanée du véhicule est en outre supérieure à la vitesse seuil $V_{eco}$, le calculateur 10 comptabilise également un terme d'excès $E_{aero}$ lié aux dissipations d'avancement par friction.

Pour obtenir la valeur d'énergie d'excès consommée par le véhicule, on ajoute les termes du tableau 1 et les termes du tableau 2 correspondants à la configuration actuelle du véhicule en ce qui concerne la régulation du confort et l'allure d'avancement du véhicule.

On décrit dans ce qui suit la manière dont sont calculés les différents termes de contribution indiqués dans le tableau 2.

A partir de la valeur d'énergie UxI transmise par le gestionnaire de batterie 3, l'unité de commande électronique 5 calcule une puissance aux roues $P_{roues}$ de la manière suivante :

$$P_{roues} = UI/Rdt_{mot} \text{ si } UI \geq 0$$
$$P_{roues} = UI/Rdt_{gen} \text{ si } UI < 0$$

$$(\text{Equation 1})$$

où :

- $Rdt_{mot}$, le rendement "en fonctionnement moteur", est une valeur supérieure à 1, qui peut être prise constante ou qui peut être cartographiée en fonction de la vitesse de rotation du moteur 4,
- $Rdt_{gen}$, le rendement "en fonctionnement générateur", est une valeur inférieure ou égale à 1 qui peut être considérée comme constante ou qui peut être également cartographiée en fonction de la vitesse de rotation du moteur 4.

Rendement du moteur et Rendement du générateur sont donc deux valeurs ou deux cartographies mémorisées par l'unité de commande 5. La puissance $P_{roues}$ permet de connaître à chaque instant la puissance mécanique reçue au niveau des roues motrices du véhicule. On utilise en particulier cette puissance pour calculer une énergie cinétique de consigne $Ec_{cons}$, qui correspond à une énergie cinétique induite par la régulation que le conducteur effectue au niveau de la pédale d'accélération. Cette énergie cinétique de consigne évite de comptabiliser l'influence des variations de vitesse liées, par exemple, aux forces de gravité, quand le véhicule circule sur une route en pente.

On choisit de calculer de manière itérative cette énergie cinétique de consigne $Ec_{cons}$ à un instant $t+\delta t$, à partir de l'énergie cinétique correspondant à l'instant précédent t de la manière suivante :

$$Ec_{cons}(t+\delta t) = Ec_{cons}(t) + P_{roues}\delta t \qquad \text{(Equation 2)}$$

en imposant en outre à chaque instant $O \le Ec_{cons} \le \frac{1}{2}MV^2$

et en posant $Ec_{cons}(t) = \frac{1}{2}M V_{cons}^2(t)$ pour définir une vitesse de consigne $V_{cons}$

M est la masse du véhicule et V est la vitesse instantanée du véhicule.

En première approximation, on peut choisir comme masse du véhicule une masse moyenne du véhicule faiblement chargé, avec deux passagers par exemple.

La puissance aux roues $P_{roues}$ est également utilisée pour calculer une énergie cinétique $Ec_{surv}$ dite « de survitesse de non anticipation ». On peut par exemple définir $Ec_{surv}$ de la manière suivante :

$$Ec_{surv}(t+\delta t) = Ec_{cons}(t) + Ec_{surv}(t)\left(1 - \frac{\delta t}{\tau}\right) \qquad \text{(Equation 3)}$$

En prenant par exemple comme valeur initiale $Ec_{surv} = 0$ au moment où le conducteur du véhicule réinitialise le compteur du tableau de bord.

$\delta t$ est l'intervalle du temps de calcul séparant la mesure précédente des roues et la mesure actuelle de $P_{roues}$.

$\tau$ est une constante de temps d'amortissement choisie par exemple égale à une valeur qui peut être une constante comprise entre quatre et huit secondes.

Si la puissance $Ec_{cons}(t)$ fournie aux roues est nulle pendant une durée de l'ordre de $\tau$, la valeur résiduelle de $Ec_{surv}$ devient très faible.

Il y a ainsi un effet d'oubli de l'énergie cinétique emmagasinée sur une période $\tau$.

En revanche, l'énergie cinétique $Ec_{surv}$ continue à croître tant que $Ec_{cons}(t)$ **augmente.**

On ne comptabilise ici la puissance aux roues que lorsqu'elle est positive c'est-à-dire quand la machine électrique 4 fonctionne comme moteur de propulsion.

Pour calculer l'énergie $E_{brake}$ dissipée dans les freins, le calculateur 10 vérifie d'abord si le capteur 8 indique que le frein est actionné. Si le frein n'est pas actionné, aucune puissance de freinage n'est comptabilisée, si le frein est actionné, on estime la puissance de freinage $P_{brake}$ à partir de l'équation de la dynamique suivante :

$$P_{brake} + P_{grav} + P_{fric} + P_{roues} = MV\frac{dV}{dt} \qquad \text{si br = vrai} \qquad \text{(Equation 4)}$$

où :

$P_{fric}$ est la puissance des forces de friction autre que les forces des freins,
$P_{grav}$ est la puissance des forces de gravitation,
et $P_{roues}$ est la puissance délivrée aux roues.

Pour pallier aux imprécisions d'estimation de la puissance de dissipation des forces de friction $P_{fric}$, et la difficulté à calculer les puissances $P_{grav}$ liées aux forces de gravitation, -nécessitant des informations sur la pente de la route sur laquelle circule véhicule-, on substitue dans l'équation 4, le terme de variation d'énergie cinétique totale $MV\frac{dV}{dt}$ par une variation d'énergie cinétique de consigne $\frac{d(Ec_{cons})}{dt}$ où $Ec_{cons}$ est l'énergie cinétique de consigne définie plus haut, soit :

$$P_{brake} = -P_{fric} - P_{roues} + \frac{d(Ec_{cons})}{dt} \qquad \text{(équation 4bis)}$$

On évite ainsi d'obtenir par exemple une estimation de puissance de freinage positive -soit faisant le véhicule-. Les équations 4 et 4bis sont équivalentes sur route plane. L'estimation obtenue par l'équation 4 bis reste cohérente sur route vallonnée. Ce mode de calcul peut mener à une légère surestimation des forces de freinage si le véhicule est en montée, mais l'utilisation des freins est rare dans ce cas de figure.

Selon les variantes de réalisation, on peut remplacer ce mode d'estimation par une évaluation directe de la puissance dissipée par freinage, en fonction de la force d'appui sur les freins. Ce mode d'évaluation est notamment possible si le véhicule est équipé d'un système de freinage hydraulique instrumenté pour mesurer la force de freinage. On peut alors, à partir des estimations du capteur de pression, remonter à une estimation du couple de freinage, et obtenir la puissance de freinage en multipliant ce couple par la vitesse angulaire des roues.

Pour estimer la puissance $P_{fric}$ des forces de friction autres que les forces de friction des freins, on considère que les composantes principales de ces forces de friction comprennent :

- la puissance de forces de freinage aérodynamiques,
- et la puissance des forces de frottement des roulements des roues du véhicule.

Soit :

$$Pf_{ric} = P_{aero} + P_{bear} \qquad \text{(Equation 5)}$$

La puissance $P_{bear}$ dissipée dans les roulements peut, en première approximation, s'écrire sous la forme :

$$P_{bear} = -bV \qquad \text{(Equation 6)}$$

où b est une constante issue de la formule dite de Hoerner, et qui est égale à :

$$b = M\left(\alpha + \frac{\beta}{\Pi_{Pneus}}\right) \qquad \text{(Equation 7)}$$

où M est la masse du véhicule, $\alpha$ et $\beta$ sont des constantes et $\Pi_{pneus}$ est la pression de gonflement des pneus du véhicule.

La puissance dissipée par les forces de frottement aérodynamiques $P_{aero}$ peut être en première approximation considérée comme égale à :

$$P_{aero} = -aV^3 \qquad \text{(Equation 8)}$$

où a est une constante dépendant de la densité $\rho$ de l'air et d'un coefficient aérodynamique SCx du véhicule, sous la forme :

$$a = \frac{1}{2}\rho SCx \qquad \text{(Equation 9)}$$

On peut donc estimer la puissance de freinage sous la forme suivante :

$$P_{brake} = \frac{dEc_{cons}}{dt} - P_{roues} + aV^3 + bV$$

La surconsommation entraînée par la puissance de freinage $P_{brake}$ est égale à une valeur de surconsommation au niveau de la batterie, et qui est :

$$P_{brake}^{bat} = P_{brake} \times \mathrm{Rdt}_{mot}$$

Et l'énergie "gaspillée" en freinage par unité de distance parcourue vaut

$$E_{brake} = \frac{1}{V} \times P_{brake} \times \mathrm{Rdt}_{mot} = \frac{1}{V} \times \left( \frac{dEc_{cons}}{dt} - P_{roues} \right) + aV^2 + b, \quad \mathrm{si\ br\ =\ vrai}$$

(Equation 10)

où V et la vitesse du véhicule, et la variable logique "br" indique que le frein dissipatif est actionné.

La puissance $P_{AR}$ de pertes par allers-retours d'énergie de la batterie vers les roues puis de nouveau vers la batterie, vaut :

$$P_{AR} = -P_{roues} x \left( Rdt_{mot} - Rdt_{gén} \right) \qquad \text{(Equation 11)}$$

En effet, une puissance unitaire apportée aux roues « coûte » une puissance $\mathrm{Rdt}_{mot}$ pour être fournie aux roues et on n'en récupère ensuite qu'une proportion égale à $\mathrm{Rdt}_{gén}$.

L'énergie correspondante par unité de distance parcourue est donc égale à

$$E_{AR} = \frac{P_{AR}}{V} = -\frac{P_{roues}}{V} x \left( Rdt_{mot} - Rdt_{gén} \right) \qquad \mathrm{si\ P_{roues}>0} \qquad \text{(Equ 12)}$$

où V est la vitesse du véhicule.

Suivant les variantes de réalisation, on peut calculer l'énergie perdue par aller retour, non sur la base de la puissance $P_{roues}$ totale fournie aux roues, mais d'un incrément de puissance $\Delta P_{roues}$ fourni pour passer d'une vitesse "raisonnable" (par exemple $V_{eco}$) à la vitesse actuelle $V>V_{eco}$.

En ce qui concerne l'énergie surconsommée du fait des forces de frottement aérodynamique $E_{aero}$, on souhaite comptabiliser de manière différente :

- les pertes liées à la vitesse induite par le conducteur par l'appui sur la pédale d'accélération,
- et les pertes induites par une vitesse éventuellement non induite par le conducteur, liées par exemple à une vitesse prise pendant une phase de descente du véhicule sur une route en pente.

En outre, on ne souhaite pas comptabiliser l'énergie qui serait de toute façon dissipée dans le cadre d'un roulage « de référence » du véhicule. On raisonne, sur les énergies aérodynamiques dissipées, qui sont obtenues en multipliant les puissances aérodynamiques dissipées par les vitesses correspondantes du véhicule, soit :

$$E_{aero\_tot} = \frac{1}{V} P_{aero} = -aV^2 \qquad \text{(Equation 13)}$$

$E_{aero\_tot}$ est l'énergie aérodynamique totale dissipée par unité de distance parcourue du véhicule,

$$\Delta E_{aero\_tot} = -a\left(V^2 - V_{eco}^2\right) \text{ si } V \geq V_{eco}$$

$$\Delta E_{aero\ tot} = 0 \qquad\qquad \text{si } V < V_{eco}$$

où $\Delta E_{aero\_tot}$ est l'excédent d'énergie par friction aérodynamique dissipée par rapport à un mode de roulage de référence à une vitesse égale à la vitesse $V_{eco}$,

$$\Delta E_{aero\_cons} = -a\left(V_{cons}^2 - V_{eco}^2\right) \text{ si } V_{cons} \geq V_{eco}$$

$$\Delta E_{aero\_cons} = 0 \qquad\qquad \text{si } V_{cons} < V_{eco}$$

$$\text{si } V_{cons} < V_{eco}$$

où $\Delta E_{aero-cons}$ est l'excédent d'énergie par unité de distance, par rapport au mode de roulage de référence à la vitesse $V_{eco}$, directement induite par les actions du conducteur sur la pédale d'accélération.

En tenant compte des rendements en mode de fonctionnement moteur et en mode de fonctionnement générateur de la machine électrique 4, on considère que les pertes aérodynamiques comprennent :

- une part d'énergie perdue de manière délibérée du fait du mode de conduite du conducteur correspondant à une énergie que l'on a fourni en excès pour maintenir une vitesse excessive ; on applique donc à cette part d'énergie un rendement moteur pour estimer l'énergie correspondante dissipée au niveau de la batterie,
- une part « non intentionnelle » d'énergie perdue du fait des frottements aérodynamiques, qui n'est pas une énergie délibérément fournie en excès, mais si cette énergie n'avait pas été dissipée par frottement elle aurait pu être récupérée en mode de freinage régénératif, on lui applique donc un rendement générateur.

On exprime donc l'excès d'énergie $E_{aero}$ dissipée du fait des frottements aérodynamiques, sous la forme suivante :

$$E_{aero} = \Delta E_{aero\_cons} x R dt_{mot} + \left(\Delta E_{aero\_tot} - \Delta E_{aero\_cons}\right) x R dt_{gén}$$

$$\boxed{E_{aero} = -a\left(V_{cons}^2 - V_{eco}^2\right) x R dt_{mot} - a\left(V^2 - V_{cons}^2\right) x R dt_{gén}} \quad (\text{Equation } 14)$$

Une fois que l'unité de calcul 10 a déterminé les termes des tableaux 1 et 2 à prendre en compte, elle les somme pour obtenir une valeur $E_{excès} = \Delta E_{surconf} + \Delta E_{allure}$ traduisant l'excès d'énergie consommée par unité de distance parcourue.

Suivant une variante de réalisation, le calcul des différents termes de surconsommation peut être effectué sous forme de puissances dans un premier temps, pour délivrer une valeur instantanée de puissance d'excès qui est ensuite convertie en énergie d'excès par unité de distance. C'est ce mode de réalisation qui est représenté sur la figure.

L'énergie de surconsommation instantanée est ensuite filtrée pour obtenir une surconsommation $C_{excès}$ moyenne à court, à moyen ou à long terme. En parallèle, l'énergie UxI réellement prélevée sur la batterie est filtrée pour obtenir une consommation $C_{real}$ moyenne à court, à moyen ou à long terme.

On peut éventuellement effectuer plusieurs types de filtrages afin de renseigner le conducteur à la fois sur sa surconsommation moyenne, par exemple à l'échelle d'une centaine de kilomètres, et sur sa surconsommation récente, par exemple sur une échelle de dix kilomètres. Cette dernière lui permet de se rendre compte des effets d'une éventuelle modification récente de son style de conduite.

Le filtrage peut s'effectuer par une moyenne glissante, ou, afin de limiter l'espace mémoire nécessaire, par un filtre d'ordre 1. Le filtre d'ordre 1 consiste à calculer un barycentre entre la dernière valeur de surconsommation estimée et la valeur de surconsommation moyenne estimée au pas de calcul précédent.

On peut directement appliquer le filtrage à la valeur de consommation « optimisée » $E_{eco}$, qui est égale à :

$$E_{eco} = UI + \Delta E_{allure} + \Delta E_{surconf}$$

$\Delta E_{allure}$ et $\Delta E_{surconf}$ étant, avec les conventions d'écritures ci-dessus, définies pour être négatives. Dans le cas où l'on applique le filtrage directement à l'énergie de consommation optimisée, le filtrage par un filtre du premier ordre peut par exemple être appliqué suivant une formule du type :

$$E_{eco\_moy}(t+\delta t) = \left(1 - V\frac{\delta t}{\Delta L}\right)E_{eco\_moy}(t) + \frac{V\delta t}{\Delta L}E_{eco}(t) \qquad (15)$$

où :

$E_{eco\_moy}(t+\delta t)$ est la valeur filtrée à l'instant t+δt,
$E_{eco\_moy}(t)$ est la valeur filtrée à l'instant de calcul précédent t,
V est la vitesse du véhicule,
δt est l'intervalle de temps entre deux pas de calcul, et
ΔL est un intervalle de filtrage, qui peut par exemple être de l'ordre de 10 km pour un filtrage à court terme, et de l'ordre d'une centaine de km pour un filtrage à long terme.

Suivant les variantes de réalisation, on peut choisir d'afficher sur le système d'affichage 18, deux valeurs à comparer, telles que d'une part, l'autonomie A correspondant au mode de conduite actuel du véhicule, et d'autre part l'autonomie « optimisée » D correspondant au mode de conduite de référence.

On peut également afficher en parallèle la consommation instantanée au kilomètre du véhicule et la consommation instantanée ou moyennée « optimisée », que le conducteur pourrait obtenir en modifiant son style de conduite. On peut également choisir d'afficher la consommation réelle en parallèle à la surconsommation, que le conducteur devrait s'efforcer de faire tendre vers 0.

L'affichage peut être effectué soit en valeur absolue, par exemple en kilowatt.heure au kilomètre, ou en valeur relative, par exemple en affichant le pourcentage de la consommation actuelle que le conducteur pourrait s'économiser en modifiant son style de conduite. L'affichage peut aussi différencier l'origine des surconsommations : de confort thermique, de manque d'anticipation ou de survitesse.

L'invention permet ainsi au conducteur d'évaluer l'efficacité de son style de conduite et de tester l'influence d'une modification du style de conduite sur les indicateurs affichés.

Le dispositif ne nécessite que les informations collectées par les capteurs embarqués sur le véhicule, sans recourir à des bases de données extérieures concernant la topologie des routes à parcourir, que ces bases de données soient pré-chargées ou disponibles par des liaisons sans fil.

Le calculateur 10 n'a besoin que d'un nombre réduit d'informations, qui sont des informations couramment disponibles sur le véhicule à d'autres fins de contrôle. L'algorithme de calcul utilisé est très simple et peu gourmand en ressources mémoire. La précision obtenue sur l'estimation de l'autonomie potentielle du véhicule et sur l'estimation de la surconsommation instantanée ou de la surconsommation moyenne, est suffisante pour permettre au conducteur d'adapter son style de conduite de manière pertinente.

L'objet de l'invention ne se limite pas aux exemples de réalisation décrits et peut se décliner de nombreuses variantes. Par exemple le filtrage utilisé pour obtenir l'énergie moyenne d'excès peut être un filtre d'ordre 1, peut être une moyenne glissant sur une certaine durée ou une certaine distance parcourue, ou encore un autre type de filtre. Des variations sont possibles dans les formules employées pour estimer les pertes dissipatives de friction ou les pertes aérodynamiques. La conversion des différentes composantes de surconsommation, pour transformer les puissances instantanées en surconsommations par unité de distance, peut se faire à différents stades du calcul.

Ainsi, lorsque l'on comptabilise l'énergie dissipée en excès par les frottements aérodynamiques, les calculs peuvent faire apparaître un polynôme du deuxième degré ou du troisième degré de la vitesse du véhicule, selon que le décompte est fait en termes d'énergie au kilomètre ou en termes de puissance instantanée.

Le filtrage pour obtenir une surconsommation moyenne à court ou à plus long terme peut se faire, suivant les modes de réalisation, soit par rapport au temps, soit par rapport à la distance parcourue.

Il est possible de comptabiliser tous les termes de surconsommation d'excès sous forme de puissance instantanée, et recalculer seulement à la fin, des valeurs par kilomètre d'énergie consommée et d'énergie d'excès consommée.

Il est également possible de prendre en compte les excès de consommation sous forme d'énergie au kilomètre dès les premières étapes de calcul, comme cela est proposé plus haut pour le calcul de l'énergie d'excès des forces de frottement aérodynamique.

Les résultats des calculs pourront être légèrement différents suivant les deux méthodes, tout en restant globalement valables. Ainsi, si l'on fait d'abord le raisonnement en puissance, la puissance $P_{eco}$ théoriquement consommée avec le mode de conduite de référence, sera égale à la différence entre la puissance U.I réellement consommée, et la somme des deux puissances de surconsommation $\Delta P_{allure}$ et $\Delta P_{surconf}$.

L'énergie consommée au kilomètre $E_{eco}$ se déduira à l'aide de la vitesse à laquelle roule ce véhicule en mode économique, de la puissance $P_{eco}$ précédente, suivant la formule $E_{eco} = \dfrac{P_{eco}}{V_{eco}}$, puisqu'il faut prendre en compte la vitesse à laquelle roule le véhicule en mode économique.

Si l'on souhaite effectuer en amont le raisonnement en fonction des énergies consommées au kilomètre, l'énergie $E_{eco}$ sera égale à l'énergie réellement consommée par le véhicule au kilomètre, c'est-à-dire $\dfrac{U.I}{V}$, énergie à laquelle on soustrait les termes de surconsommation liés à l'allure et au surconfort thermique. On obtient alors une expression de la forme : $E_{eco} = \dfrac{U.I.}{V} + \dfrac{\Delta E_{allure}}{V} + \dfrac{\Delta E_{surconf}}{V}$. Le terme U.I. sera donc normalisé par une vitesse V différente de celle utilisée dans le mode de calcul précédent, où ce même terme est normalisé par $V_{eco}$.

Suivant le type de modélisation retenue, les formules utilisées pour calculer les différents termes de surconsommation liés à l'allure du véhicule peuvent donc différer d'un mode de réalisation à un autre, par exemple se déduire l'une de l'autre moyennant un rapport $\dfrac{V}{V_{eco}}$.

On retient que le calculateur 10 est apte à évaluer la surconsommation liée à l'allure du véhicule ou aux variations d'allure du véhicule, à partir d'un nombre de données réduit, parmi lesquelles la puissance effectivement consommée par la batterie U.I, la vitesse et l'historique de vitesse du véhicule, une information permettant de savoir si un frein dissipatif est actionné, et une information permettant de savoir si la machine électrique 4 fonctionne en moteur ou en générateur.

Le dispositif d'aide à l'optimisation de la conduite est donc simple et peu coûteux à réaliser, et peut permettre d'améliorer l'autonomie du véhicule si le conducteur utilise les informations qui lui sont données.

**Revendications**

1. Procédé d'aide à la conduite d'un véhicule automobile comportant au moins un moteur électrique (4) alimenté par une batterie (2) et apte à entraîner des roues motrices du véhicule, dans lequel on calcule, à partir de la consommation effective d'énergie (UI) du véhicule et de valeurs collectées par des capteurs du véhicule ($P_{chauff}$, $P_{clim}$, N, $T_{ext}$, br), une consommation optimisée du véhicule sur le même trajet que le véhicule est en train de parcourir, la consommation optimisée correspondant à un style de conduite de référence, on informe le conducteur de la distance (D) qu'il pourrait parcourir avec la réserve d'énergie ($W_{disp}$) disponible à bord du véhicule, s'il adoptait le style de conduite de référence, ou bien on informe le conducteur de l'économie d'énergie par unité de distance parcourue qu'il pourrait réaliser, s'il adoptait le style de conduite de référence, et **caractérisé en ce qu'**on calcule, sur une période de temps ou sur une longueur de trajet prédéfinie, une surconsommation ($C_{excès}$) ou énergie moyenne d'excès consommée en excès par le véhicule, et on calcule une consommation optimisée en soustrayant l'énergie moyenne d'excès à l'énergie ($C_{real}$) effectivement consommée par le véhicule.

2. Procédé d'aide à la conduite selon la revendication 1, dans lequel on détermine une puissance ($P_{excès}$) ou une énergie instantanée d'excès à partir de laquelle on calcule l'énergie moyenne d'excès ($C_{excès}$), la puissance ou l'énergie instantanée d'excès étant calculée à partir de paramètres comprenant la vitesse instantanée (V) du véhicule, la puissance (UI) puisée sur la batterie (2) ou la puissance ($P_{roues}$) transmises aux roues par le moteur (4), un signal (br) d'actionnement des freins du véhicule, et une énergie cinétique de consigne ($Ec_{cons}$) calculée à partir des paramètres précédents.

3. Procédé d'aide à la conduite selon la revendication 2, dans lequel l'énergie cinétique de consigne ($Ec_{cons}$) est calculée en intégrant la puissance ($P_{roues}$) fournie aux roues par le moteur, et en imposant pour bornes à chaque instant à l'intégrale, la valeur nulle comme borne inférieure, et l'énergie cinétique totale du véhicule comme borne supérieure.

**EP 2 723 604 B1**

**4.** Procédé d'aide à la conduite selon les revendications 2 ou 3, dans lequel la puissance instantanée d'excès ($P_{excès}$) comprend en outre un terme dépendant de la puissance dissipée en climatisation ($P_{clim}$) et/ou en chauffage ($P_{chauff}$) du véhicule.

**5.** Procédé d'aide à la conduite selon l'une des revendications 2 à 4, dans lequel le calcul de la puissance instantanée d'excès ($P_{excès}$) comprend un ou plusieurs termes qui sont pris en compte si et seulement si une valeur d'énergie cinétique ($Ec_{surv}$) récemment accumulée par le véhicule dépasse un seuil d'énergie cinétique.

**6.** Procédé d'aide à la conduite selon l'une des revendications 2 à 5, dans lequel la puissance instantanée d'excès comprend un ou plusieurs termes liés à une vitesse excessive, qui sont pris en compte si et seulement si la vitesse du véhicule (V) dépasse une vitesse optimale de référence.

**7.** Procédé d'aide à la conduite selon la revendication 6, dans lequel le terme instantané lié à une vitesse excessive du véhicule inclut une composante de frottement sous la forme d'un polynôme du second ou du troisième degré de la vitesse du véhicule (V).

**8.** Procédé d'aide à la conduite selon les revendications 3 et 7 combinées, dans lequel le terme lié à une vitesse excessive du véhicule comprend également un polynôme du second ou du troisième degré d'une vitesse de consigne ($V_{cons}$), qui est la vitesse associée à l'énergie cinétique de consigne ($Ec_{cons}$).

**9.** Procédé d'aide à la conduite selon les revendications 3 et 6 combinées, dans lequel le terme lié à une vitesse excessive du véhicule inclut une composante de freinage de survitesse, qui est le produit, par le rendement du moteur, d'une différence de termes, parmi lesquels on compte la puissance ($P_{roues}$) transmises aux roues par le moteur (4) ou la puissance (UI) délivrée par la batterie (2), l'énergie cinétique de consigne ($Ec_{cons}$), et un terme de résistance qui est fonction de la vitesse du véhicule (V).

**10.** Procédé d'aide à la conduite selon l'une des revendications 2 à 9, dans lequel la puissance instantanée d'excès ($P_{excès}$) comprend un terme lié à un manque d'anticipation dans la conduite du véhicule, qui est comptabilisé si et seulement si le véhicule, dans une plage de temps prédéfinie précédent l'instant de calcul, a accumulé une quantité d'énergie cinétique ($Ec_{surv}$) supérieure à un seuil d'énergie cinétique.

**11.** Procédé d'aide à la conduite selon les revendications 3 et 10 combinées, dans lequel le terme lié à un manque d'anticipation fait intervenir un rendement du moteur, un rendement de freinage récupératif, la puissance (UI) puisée sur la batterie (2) ou la puissance ($P_{roues}$) transmises aux roues par le moteur (4), l'énergie cinétique de consigne ($Ec_{cons}$), et un terme de résistance qui est fonction de la vitesse instantanée (V) du véhicule.

**12.** Procédé selon l'une des revendications 1 à 11, dans lequel on informe le conducteur de sa surconsommation instantanée par rapport au style de conduite de référence, ou/et dans lequel on informe le conducteur de sa surconsommation moyenne ($C_{excès}$) sur une certaine distance ou sur un certain temps de trajet. 14. Procédé selon la revendication 13, dans lequel le calcul de surconsommation moyenne est effectué par un filtre du premier degré, c'est-à-dire en calculant un barycentre de la dernière valeur de surconsommation estimée, et de la valeur de surconsommation moyenne au pas précédent.

**13.** Véhicule automobile à propulsion électrique équipé d'un dispositif d'aide à la conduite configuré pour calculer, à partir de la consommation effective (UI) d'énergie du véhicule sur un trajet, une consommation optimisée du véhicule sur le même trajet correspondant à un style de conduite de référence, ledit dispositif d'aide à la conduite étant configuré pour informer le conducteur de la distance (D) qu'il pourrait parcourir avec la réserve d'énergie ($W_{disp}$) disponible à bord du véhicule, s'il adoptait le style de conduite de référence, ou pour informer le conducteur de la réduction de consommation qu'il pourrait obtenir en adaptant sa conduite, et **caractérisé en ce que** ledit dispositif comporte des moyens de calcul, sur une période de temps ou sur une longueur de trajet prédéfinie, d'une surconsommation ($C_{excès}$) ou énergie moyenne d'excès consommée en excès par le véhicule, et des moyens de calcul d'une consommation optimisée en soustrayant l'énergie moyenne d'excès à l'énergie ($C_{real}$) effectivement consom-mée par le véhicule.

**Patentansprüche**

**1.** Fahrhilfeverfahren für ein Kraftfahrzeug, das mindestens einen Elektromotor (4) umfasst, der von einer Batterie (2) versorgt wird und geeignet ist, die Antriebsräder des Fahrzeugs anzutreiben, bei welchem, aus dem effektiven Energieverbrauch (UI) des Fahrzeugs und Werten, die von Sensoren des Fahrzeugs gesammelt werden ($P_{chauff}$, $P_{clim}$, N, $T_{ext}$, br), ein optimierter Verbrauch des Fahrzeugs auf derselben Strecke, die das Fahrzeug gerade zurücklegt, berechnet wird, wobei der optimierte Verbrauch einem Referenzfahrstil entspricht, der Fahrer über die Distanz (D) informiert wird, die er mit der an Bord des Fahrzeugs verfügbaren Energiereserve ($W_{disp}$) zurücklegen könnte, wenn er den Referenzfahrstil annimmt, oder der Fahrer auch über die Energieeinsparung pro Einheit der zurückgelegten Distanz informiert wird, die er realisieren könnte, wenn er den Referenzfahrstil annimmt, **dadurch gekennzeichnet, dass**, über eine Zeitperiode oder über eine vordefinierte Streckenlänge, ein Überverbrauch ($C_{excès}$) oder eine übermäßige mittlere Energie, die von dem Fahrzeug überverbraucht wird, berechnet wird, und ein optimierter Verbrauch durch Subtrahieren der übermäßigen mittleren Energie von der Energie ($C_{real}$), die vom Fahrzeug effektiv verbraucht wird, berechnet wird.

2. Fahrhilfeverfahren nach Anspruch 1, bei welchem eine Leistung ($P_{excès}$) oder eine übermäßige momentane Energie bestimmt wird, aus der die übermäßige mittlere Energie ($C_{excès}$) berechnet wird, wobei die Leistung oder die übermäßige momentane Energie aus Parametern berechnet wird, welche die momentane Geschwindigkeit (V) des Fahrzeugs, die Leistung (UI), die aus der Batterie (2) bezogen wird, oder die Leistung ($P_{roues}$), die vom Motor (4) auf die Räder übertragen wird, ein Signal (br) der Betätigung der Bremsen des Fahrzeugs und eine kinetische Soll-Energie ($Ec_{cons}$) umfassen, die aus den vorstehenden Parametern berechnet wird.

3. Fahrhilfeverfahren nach Anspruch 2, bei welchem die kinetische Soll-Energie ($Ec_{cons}$) berechnet wird, indem die Leistung ($P_{roues}$), die vom Motor an die Räder geliefert wird, integriert wird und indem auf das Integral als Grenzen in jedem Moment der Wert Null als Untergrenze und die gesamte kinetische Energie des Fahrzeugs als Obergrenze angewendet werden.

4. Fahrhilfeverfahren nach Anspruch 2 oder 3, bei welchem die übermäßige momentane Leistung ($P_{excès}$) außerdem einen Term umfasst, der von der Leistung abhängt, die durch die Klimatisierung ($P_{clim}$) und/oder die Heizung ($P_{chauff}$) dissipiert wird.

5. Fahrhilfeverfahren nach einem der Ansprüche 2 bis 4, bei welchem die Berechnung der übermäßigen momentanen Leistung ($P_{excès}$) einen oder mehrere Terme umfasst, die berücksichtigt werden, wenn und nur wenn ein Wert der kinetischen Energie ($Ec_{surv}$), der vor kurzem vom Fahrzeug gesammelt wurde, eine Schwelle der kinetischen Energie überschreitet.

6. Fahrhilfeverfahren nach einem der Ansprüche 2 bis 5, bei welchem die übermäßige momentane Leistung einen oder mehrere mit einer Übergeschwindigkeit verbundene Terme umfasst, die berücksichtigt werden, wenn und nur wenn die Geschwindigkeit des Fahrzeugs (V) eine optimale Referenzgeschwindigkeit überschreitet.

7. Fahrhilfeverfahren nach Anspruch 6, bei welchem der momentane Term, der mit einer Übergeschwindigkeit des Fahrzeugs verbunden ist, eine Reibungskomponente in Form eines Polynoms zweiten oder dritten Grades der Geschwindigkeit des Fahrzeugs (V) umfasst.

8. Fahrhilfeverfahren nach Anspruch 3 und 7 in Kombination, bei welchem der Term, der mit einer Übergeschwindigkeit des Fahrzeugs verbunden ist, auch ein Polynom zweiten oder dritten Grades einer Soll-Geschwindigkeit ($V_{cons}$) umfasst, welche die Geschwindigkeit ist, die der kinetischen Soll-Energie ($Ec_{cons}$) zugeordnet ist.

9. Fahrhilfeverfahren nach Anspruch 3 und 6 in Kombination, bei welchem der Term, der mit einer Übergeschwindigkeit des Fahrzeugs verbunden ist, eine Bremskomponente einer Übergeschwindigkeit umfasst, die das Produkt ist, bezogen auf die Motorleistung, einer Differenz von Termen, zu denen die Leistung ($P_{roues}$), die vom Motor (4) auf die Räder übertragen wird, oder die Leistung (UI), die von der Batterie (2) geliefert wird, die kinetische Soll-Energie ($Ec_{cons}$) zählen, und einem Widerstandsterm, der eine Funktion der Geschwindigkeit des Fahrzeugs (V) ist.

10. Fahrhilfeverfahren nach einem der Ansprüche 2 bis 9, bei welchem die übermäßige momentane Leistung ($P_{excès}$) einen mit einer fehlenden Voraussicht beim Lenken des Fahrzeugs verbundenen Term umfasst, der kompatibilisiert wird, wenn und nur wenn das Fahrzeug, in einem vordefinierten Zeitraum, der vor dem Moment der Berechnung liegt, eine Menge an kinetischer Energie ($Ec_{surv}$) gesammelt hat, die über einer Schwelle der kinetischen Energie liegt.

11. Fahrhilfeverfahren nach Anspruch 3 und 10 in Kombination, bei welchem der Term, der mit einer fehlenden Voraussicht verbunden ist, eine Motorleistung, eine rekuperative Bremsleistung, die aus der Batterie (2) bezogene Leistung (UI) oder die Leistung ($P_{roues}$), die vom Motor (4) auf die Räder übertragen wird, die kinetische Soll-Energie ($Ec_{cons}$) und einen Widerstandsterm einsetzt, der eine Funktion der momentanen Geschwindigkeit (V) des Fahrzeugs ist.

12. Verfahren nach einem der Ansprüche 1 bis 11, bei welchem der Fahrer über seinen momentanen Überverbrauch in Bezug auf den Referenzfahrstil informiert wird, und/oder bei welchem der Fahrer über seinen mittleren Überverbrauch ($C_{excès}$) über eine bestimmte Distanz oder über eine bestimmte Zeit der Strecke informiert wird. 14. Verfahren nach Anspruch 13, bei welchem die Berechnung des mittleren Überverbrauchs durch einen Filter ersten Grades durchgeführt wird, das heißt durch eine Berechnung eines Baryzentrums des letzten Werts eines geschätzten Überverbrauchs und des Werts des mittleren Überverbrauchs im vorhergehenden Schritt.

13. Fahrzeug mit Elektroantrieb, welches mit einer Fahrhilfevorrichtung ausgestattet ist, die ausgelegt ist, aus dem effektiven Energieverbrauch (UI) des Fahrzeugs auf einer Strecke, einen optimierten Verbrauch des Fahrzeugs auf derselben Strecke zu berechnen, der einem Referenzfahrstil entspricht, wobei die Fahrhilfevorrichtung ausgelegt ist, den Fahrer über die Distanz (D) zu informieren, die er mit der an Bord des Fahrzeugs verfügbaren Energiereserve ($W_{disp}$) zurücklegen könnte, wenn er den Referenzfahrstil annimmt, oder den Fahrer über die Verbrauchsverringerung zu informieren, die er erhalten könnte, indem er seine Fahrt anpasst, und **dadurch gekennzeichnet, dass** die Vorrichtung Rechenmittel, über eine Zeitperiode oder über eine vordefinierte Streckenlänge, für einen Überverbrauch ($C_{excès}$) oder eine übermäßige mittlere Energie, die von dem Fahrzeug überverbraucht wird, und Rechenmittel für einen optimierten Verbrauch durch Subtrahieren der übermäßigen mittleren Energie von der Energie ($C_{real}$), die vom Fahrzeug effektiv verbraucht wird, umfasst.

## Claims

1. Method for aiding driving of an automotive vehicle comprising at least one electric motor (4) supplied by a battery (2) and able to propel drive wheels of the vehicle, in which an optimized consumption of the vehicle over the same journey as the vehicle is in the process of making is computed on the basis of the actual energy consumption (UI) of the vehicle and of values collected by sensors of the vehicle ($P_{heat}$, $P_{cond}$, N, $T_{ext}$, br), the optimized consumption corresponding to a reference driving style, the driver is informed of the distance (D) that he could travel with the energy reserve ($W_{avail}$) available aboard the vehicle if he adopted the reference driving style, or else the driver is informed of the energy saving per unit distance traveled that he could achieve if he adopted the reference driving style, and **characterized in that** an overconsumption ($C_{excess}$) or mean excess energy consumed in excess by the vehicle is computed over a time period or over a predefined journey length, and an optimized consumption is computed by subtracting the mean excess energy from the energy ($C_{real}$) actually consumed by the vehicle.

2. Method for aiding driving according to Claim 1, in which an instantaneous excess power ($P_{excess}$) or energy is determined on the basis of which is computed the mean excess energy ($C_{excess}$), the instantaneous excess power or energy being computed on the basis of parameters comprising the instantaneous speed (V) of the vehicle, the power (UI) drawn from the battery (2) or the power ($P_{wheels}$) transmitted to the wheels by the motor (4), a signal (br) for actuating the brakes of the vehicle, and a setpoint kinetic energy ($Ek_{setp}$) computed on the basis of the previous parameters.

3. Method for aiding driving according to Claim 2, in which the setpoint kinetic energy ($Ek_{setp}$) is computed by integrating the power ($P_{wheels}$) provided to the wheels by the motor, and by imposing as bounds at each instant on the integral the zero value as lower bound and the total kinetic energy of the vehicle as upper bound.

4. Method for aiding driving according to Claims 2 or 3, in which the instantaneous excess power ($P_{excess}$) furthermore comprises a term dependent on the power dissipated in air-conditioning ($P_{cond}$) and/or in heating ($P_{heat}$) the vehicle.

5. Method for aiding driving according to one of Claims 2 to 4, in which the computation of the instantaneous excess power ($P_{excess}$) comprises one or more terms which are taken into account if and only if a value of kinetic energy ($Ek_{overs}$) recently accumulated by the vehicle exceeds a kinetic energy threshold.

6. Method for aiding driving according to one of Claims 2 to 5, in which the instantaneous excess power comprises one or more terms related to an excessive speed, which are taken into account if and only if the speed of the vehicle (V) exceeds an optimal reference speed.

7. Method for aiding driving according to Claim 6, in which the instantaneous term related to an excessive speed of the vehicle includes a friction component in the form of a second-degree or third-degree polynomial in the speed of the vehicle (V).

8. Method for aiding driving according to Claims 3 and 7 combined, in which the term related to an excessive speed of the vehicle also comprises a second-degree or third-degree polynomial in a setpoint speed ($V_{setp}$), which is the speed associated with the setpoint kinetic energy ($Ek_{setp}$).

9. Method for aiding driving according to Claims 3 and 6 combined, in which the term related to an excessive speed of the vehicle includes an overspeed braking component, which is the product, times the efficiency of the motor, of a difference of terms, among which are counted the power ($P_{wheels}$) transmitted to the wheels by the motor (4) or the power (UI) delivered by the battery (2), the setpoint kinetic energy ($Ek_{setp}$), and a resistance term which is dependent on the speed of the vehicle (V).

10. Method for aiding driving according to one of Claims 2 to 9, in which the instantaneous excess power ($P_{excess}$) comprises a term related to a lack of anticipation in the driving of the vehicle, which is accounted for if and only if the vehicle, in a predefined time span preceding the instant of computation, has accumulated a quantity of kinetic energy ($Ek_{overs}$) greater than a kinetic energy threshold.

11. Method for aiding driving according to Claims 3 and 10 combined, in which the term related to a lack of anticipation involves an efficiency of the motor, a recuperative braking efficiency, the power (UI) drawn from the battery (2) or the power ($P_{wheels}$) transmitted to the wheels by the motor (4), the setpoint kinetic energy ($Ek_{setp}$), and a resistance term which is dependent on the instantaneous speed (V) of the vehicle.

12. Method according to one of Claims 1 to 11, in which the driver is informed of his instantaneous overconsumption with respect to the reference driving style, or/and in which the driver is informed of his mean overconsumption ($C_{excess}$) over a certain distance or over a certain journey time. 14. Method according to Claim 13, in which the computation of mean overconsumption is performed by a first-degree filter, that is to say by computing a barycenter of the last estimated overconsumption value, and of the mean overconsumption value at the previous step.

13. Electric propulsion automotive vehicle equipped with a driving aid device configured to compute, on the basis of the actual energy consumption (UI) of the vehicle over a journey, an optimized consumption of the vehicle over the same journey corresponding to a reference driving style, said device for aiding driving being configured to inform the driver of the distance (D) that he could travel with the energy reserve ($W_{avail}$) available aboard the vehicle if he adopted the reference driving style, or to inform the driver of the reduction in consumption that he could obtain by adapting his driving, and **characterized in that** said device comprises means for computing, over a time period or over a predefined journey length, an overconsumption ($C_{excess}$) or mean excess energy consumed in excess by the vehicle, and means for computing an optimized consumption by subtracting the mean excess energy from the energy ($C_{real}$) actually consumed by the vehicle.

$$D = \frac{W_{disp}}{C_{real} - C_{excès}}$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2011696 A1
- KR 100254426
- KR 100256749
- DE 10302504